(19) Europäisches Patentamt
European Patent Office
Office européen des brevets

(11)     EP 3 309 276 B1

(12)     EUROPEAN PATENT SPECIFICATION

(45) Date of publication and mention
of the grant of the patent:
**27.02.2019 Bulletin 2019/09**

(21) Application number: **16900185.6**

(22) Date of filing: **19.10.2016**

(51) Int Cl.:
*C22C 38/04* (2006.01)    *C22C 38/02* (2006.01)
*C22C 38/06* (2006.01)    *C22C 38/12* (2006.01)
*C22C 38/18* (2006.01)    *C22C 38/08* (2006.01)
*C22C 38/16* (2006.01)    *C22C 38/14* (2006.01)
*C21D 8/02* (2006.01)    *C21D 6/00* (2006.01)
*C22C 38/42* (2006.01)    *C22C 38/44* (2006.01)
*C22C 38/46* (2006.01)    *C22C 38/48* (2006.01)
*C22C 38/50* (2006.01)    *C22C 38/58* (2006.01)
*C21D 1/84* (2006.01)    *C21D 6/02* (2006.01)

(86) International application number:
**PCT/CN2016/102490**

(87) International publication number:
**WO 2017/185677 (02.11.2017 Gazette 2017/44)**

(54) **LOW-CRACK-SENSITIVITY AND LOW-YIELD-RATIO ULTRA-THICK STEEL PLATE AND PREPARATION METHOD THEREFOR**

ULTRADICKE STAHLPLATTE MIT NIEDRIGER RISSEMPFINDLICHKEIT UND NIEDRIGEM STRECKGRENZENVERHÄLTNIS UND HERSTELLUNGSVERFAHREN DAFÜR

TÔLE D'ACIER ULTRA-ÉPAISSE À FAIBLE SUSCEPTIBILITÉ À LA FISSURATION ET FAIBLE RAPPORT DE LA LIMITE D'ÉLASTICITÉ SUR LA CONTRAINTE À LA RUPTURE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2016 CN 201610272418**

(43) Date of publication of application:
**18.04.2018 Bulletin 2018/16**

(73) Proprietor: **Jiangyin Xingcheng Special Steel Works Co., Ltd**
**Jiangyin, Jiangsu 214429 (CN)**

(72) Inventors:
• **SUN, Xianjin**
**Jiangyin**
**Jiangsu 214429 (CN)**
• **GAO, Zhuzhong**
**Jiangyin**
**Jiangsu 214429 (CN)**
• **HU, Jianguo**
**Jiangyin**
**Jiangsu 214429 (CN)**

• **LI, Jingtao**
**Jiangyin**
**Jiangsu 214429 (CN)**
• **MIAO, Pifeng**
**Jiangyin**
**Jiangsu 214429 (CN)**
• **WU, Xiaolin**
**Jiangyin**
**Jiangsu 214429 (CN)**
• **SHI, Ailai**
**Jiangyin**
**Jiangsu 214429 (CN)**
• **ZHAO, Fu**
**Jiangyin**
**Jiangsu 214429 (CN)**
• **XU, Feng**
**Jiangyin**
**Jiangsu 214429 (CN)**
• **FANG, Shouyu**
**Jiangyin**
**Jiangsu 214429 (CN)**

(74) Representative: **Huang, Liwei**
**Cäcilienstraße 12**
**40597 Düsseldorf (DE)**

(56) References cited:
EP-A1- 2 133 441    CN-A- 101 660 100
CN-A- 101 660 100    CN-A- 102 080 183
CN-A- 102 345 049    CN-A- 105 803 325
JP-A- H1 180 833    JP-A- H11 335 735

JP-A- 2006 322 019    JP-A- 2008 056 962
JP-A- 2008 101 242    JP-A- 2011 017 061
JP-B2- 3 520 818

**Description**

**Technical Field**

The invention relates to the technical field of steel, and more particularly to an ultra-heavy steel plate with low sensitivity to cracking and low ratio of yield strength to tensile strength (the ratio of yield strength to tensile strength is called as "yield ratio" hereafter, YL(YR)), which is adapted to be applied in low temperature environments at -60°C , and a manufacturing method thereof.

**Background Art**

With ongoing advances of industrial technology and economy, high strength structural steel is increasingly applied in shipbuilding, marine equipment, building structures, railway transportation, bridge construction, large steel structures and other fields.The strength improvement may greatly reduce the total application amounts of steel, which can make the overall construction equipment light in weight and simultaneously reduce the cost of resources. However, as the steel strength improves, it also brings some negative performances when compared with common low alloy structural steel. Wherein, rising of the yield ratio, decreasing of the welding property and decreasing of the low-temperature toughness seriously restrict promotion and development of high strength steel. Low yield ratio, high low-temperature toughness and good weldability have become major development efforts of the third-generation high performance structural steel. Currently, there is no domestic report on 40-70 mm thick, high strength and high toughness steel plate in low-carbon design with low cracking sensitivity and low yield ratio which can be applied at -60°C.

Patent publication No. CN102433507A discloses a low yield ratio, easy-welded high strength steel plate and its manufacturing process, which utilizes low-carbon, Nb and Cr microalloyed component design with a yield strength of 460-560MPa, a tensile strength of 700-790MPa and a yield ratio less than 0.7. However,this patent product has a totally different component design from the invention, and concurrently, it can only be applied at the condition of -20°C, not satisfied to be applied at the condition of -60°C. About the thickness gauge, it can only be reached to 30 mm, and cannot guarantee performance for a thicker steel plate.

Patent publication No. CN103114186A discloses a technical solution of controlled cooling method of easy-welded high performance steel plate, which utilizes microalloying element design of low-carbon, Nb, V, Cr, B, Ti and the like, and utilizes controlled rolling and cooling process, obtaining a low yield ratio steel plate having a thickness from 12 mm to 60 mm with Pcm≤0.21, which can be applied at the condition of -40°C, and with a yield strength of more than 530MPa, a tensile strength of more than 700MPa, a yield ratio of less than 0.8, and an impact energy at -40°C of more than 120J.

JP 2006-322019A discloses a H-shape steel of TMCP (thermo-mechanical control process) type and 590 MPa class, where the steel is in low-carbon design and exhibits low cracking sensitivity and low yield ratio.

JP H11-335735A manufactures a 50kg class extra thick shape steel in low-carbon design which is excellent in weldability and strength.

JP 2011-017061A provides a high-tensile-strength steel plate which has a high strength and a tensile strength TS of 760 MPa or more.

**Summary of the Invention**

Aimed at the above prior art, the technical problem solved by the invention is to provide high strength steel plates, which can be applied at -60°C and have a thickness of 40-70 mm, carbon equivalent of ≤ 0.43, cold cracking sensitivity coefficient (Pcm) of ≤ 0.20, a yield ratio of ≤ 0.80, and a manufacturing method thereof.

Our invention provides a steel plate as described in claim 1, as well as a method for manufacturing the steel plate as described in claim 2.

The smelting process of steel plate is: KR molten iron pretreatment - BOFconverter smelting - LF refining - RH vacuum degassing - slab continuous casting - slow cooling Slab dehydrogenation process - Slab reheat-controlled rolling - controlled cooling - Test - packaging and storing.

The effects of all components included in the invention and reasons of their contents selection are described in details as follows:

C: a major element affecting strength, low-temperature toughness and weldability; improving steel strength by solid solution strengthening; when the carbon content is too low (lower than 0.03%), the strength cannot be guaranteed, while if the carbon content is too high (higher than 0.10%), it will cause negative impacts on the toughness and weldability of steel. The C content of the invention is selected from the range of 0.05-0.09%, which may guarantee good low-temperature toughness and weldability of the steel plate on the basis of ensuring strength of the steel plate.

Si: a deoxidizing element having solid solution strengthening effect; too high Si content will cause negative impacts on surface quality, toughness and welding property; the Si content of the invention is selected from the range of 0.2-0.4%.

Mn: a major element affecting strength, low-temperature toughness and weldability; a typical austenite stabilizing element having solid solution strengthening effect; the solid solution strengthening effect will be ineffective when the Mn content is lower than 0.8%, while too high Mn content will increase the carbon equivalent of steel and the cracking sensitivity coefficient of steel which may cause negative impacts on the weldability of steel. Meanwhile, Mn may susceptibly generate segregation in the center of the steel plate which may cause negative impacts on the low-temperature impacts toughness of the center of the steel plate. The Mn content of the invention is selected from the range of 1.3-1.6%.

Al: a deoxidizing element having effects of deoxygenation and nitrogen fixation to form AlN functioning as refining grains. The Al content of the invention is selected from the range of 0.02-0.04%.

Nb: a major grain-refining element, which can greatly refine the austenite grains by the pinning effect and precipitation strengthening effect during the rolling process to improve recrystallization temperature of the austenite, which is in favor of improving the strength and toughness. The Nb content of the invention is selected from the range of 0.03-0.08%.

V: a carbonitride-forming element, which can refine ferrite grain size, in the form of dispersion strengthening, by forming V(C, N) to improve the strength and toughness of steel; too high content will cause negative impacts on the weldability. The V content of the invention is selected from the range of 0.03-0.08%.

Cr: a mid-strength carbide forming element, which can greatly improve the hardenability and strength of steel. When added excessively, it will cause negative impacts on the low-temperature impact toughness and the weldability of steel. The Cr content of the invention is selected from the range of 0.1-0.5%.

Ni: it can increase the strength of steel and improve the low-temperature impact toughness simultaneously. When the Ni content is too high, it may produce high viscosity iron oxide scales which may affect surface quality of the steel plate. Meanwhile, too high Ni content will increase the carbon equivalent and the cracking sensitivity coefficient of the steel plate, which may cause negative impacts on the weldability of the steel plate. The Ni content of the invention is selected from the range of 0.1-0.5%.

Mo: it can significantly postpone the pearlite transformation and guarantee to obtain the bainite structure at a lower cooling rate; and for the ultra-heavy steel with low yield ratio, it can guarantee to obtain the ferrite/bainite dual-phase structure over the entire thickness of the section. The Mo content of the invention is selected from the range of 0.1-0.3%.

Cu: it mainly provides the effects of solid solution strengthening and precipitation strengthening, while improves the antiweathering performance of steel and reduces the hydrogen induced cracking sensitivity of steel plate; too high may cause negative impacts on the weldability of the steel plate. The Cu content of the invention is selected from the range of 0.2-0.5%.

Ti: a strong nitride forming element, which provides the effect of precipitation strengthening by forming TiN, and can effectively refine the grains, improves the low-temperature toughness, further improves the recrystallization temperature of austenite by adding combined Nb and Ti; too high content may cause negative impacts on the toughness of the steel plate. The Ti content of the invention is selected from the range of 0.01-0.02%.

P, S: a major impurity element of steel, which may cause negative impacts on the low-temperature impact toughness of the steel plate, particularly the center of the steel plate, thereby lower content is better. According to actual manufacturing conditions, the P and S contents of the invention are separately selected from the range of $P \leq 0.015\%$, $S \leq 0.003\%$.

N: nitrogen is selected from the range of $N \leq 0.007\%$.

The manufacturing method of the above steel plate with low crack sensitivity and low yield ratio comprises the following steps:

(1) in the steel-making process, producing molten steel with high purity by KR molten iron pretreatment, BOF, LF refining, RH vacuum degassing treatment, then producing a continuous casting slab with a thickness of 150-450 mm by the ultra-heavy slab continuous casting process, thereafter processing the continuous casting slabs with the treatment of lid-covering stacking slow cooling and hydrogen diffusion(dehydrogenation), wherein the time for de-hydrogenation is $\geq$ 120 hours;

(2) heating the continuous casting slabs to 1130-1250°C, incubating for 150-180min to cause fully dissolution of the alloy elements in the steel to ensure performance uniformity, and descaling the continuous casting slabs by high pressure water after exiting the furnace;

(3) exerting two stages of rolling on the continuous casting slabs, the first stage is rough rolling with the rolling starting temperature of 1050-1150°C and reduction of each rolling pass $\geq$15%; the second stage is finished rolling with the rolling starting temperature of 840-900°C and the total reduction of the finished rolling $\geq$60%;

(4) a controlled cooling applied after rolling has two stages, the first stage is an air-cooling stage with the cooling starting temperature of 800-860°C and the final cooling temperature of 600-750°C; the second stage is an accelerated cooling stage with the cooling rate of 13-17°C/s and the final cooling temperature of 300-450°C.

(5) after the controlled cooling stage, applying a hot straightening treatment and finally cooling to obtain the steel plate finished-products.

The invention is directed to an ultra-heavy, high strength steel plate with low cracking sensitivity and low yield ratio which is adapted to be applied at the condition of -60°C. For the components, it uses low carbon, low carbon equivalent and low cracking sensitivity coefficient component design; for the process, it uses the smelting of high purity steel and continuous slabs with a thickness of 150-450 mm as raw materials, and applies the controlled rolling and controlled cooling process to manufacture the ultra-heavy, high strength steel plate, which has a thickness of 40-70 mm, low cracking sensitivity and low yield ratio, and is adapted to be applied at the condition of -60°C.

As compared with the prior art, the advantages of the invention include:

(1) The invention applies the low carbon, low carbon equivalent and low cracking sensitivitycomponent design, wherein the C content is 0.05-0.09%, the carbon equivalent is $\leq$0.43 and the cracking sensitivityPcm is $\leq$0.20, to ensure the weldability of the steel plate.

(2) For the ultra-heavy steel plate with a thickness of 40-70 mm according to the invention, on basis of having good weldability, it also has excellent performances of low yield ratio and high low-temperature toughness, and has a yield strength of $\geq$460MPa, a tensile strength of 570-760MPa, a yield ratio of $\leq$0.80, an elongation rate of $\geq$17%, Charpy impact energy of $\geq$150J when it is measured at 1/4 thickness and 1/2 thickness of the steel plates at the temperature of -60°C, a reduction of area in Z direction of $\geq$35%, which is satisfied to be applied at the low-temperature condition of -60°C.

## Brief Description of the Drawings

Fig. 1 is a microstructure diagram positioned at 1/4 thickness of the 70 mm thick steel plate according to an embodiment of the invention;

Fig. 2 is a microstructure diagram positioned at 1/2 thickness of the 70 mm thick steel plate according to an embodiment of the invention.

## Detailed Description of the Invention

The invention is now described in further details with reference to embodiments shown in the drawings.

Examples 1-2:

The steel plate manufacturing method related to the two embodiments: KR molten iron pretreatment - converter smelting - LF refining - RH vacuum degassing - continuous casting - lid-covering slow cooling for the continuous casting slabs - detection and cleaning of the continuous casting slabs - heating of the casting slabs - descaling by high pressure water - controlled rolling - controlled cooling - hot straightening - air-cooling, to manufacture two sets of low cracking sensitivity, low yield ratio and high strength steel plates with a thickness of 70 mm and can be used at low temperature. It is also completely suitable for manufacturing the steel plates having a thickness less than 70 mm.

Specific processes of the above heating, rolling and slow cooling include heating the continuous casting slabs with a thickness of 370 mm to 1180°C and incubating for 180min (Example 1), or heating to 1220°C and incubating for 150min (Example 2), descaling the continuous casting slabs by high pressure water after exiting the furnace; then applying two stages of rolling, the first stage is rough rolling, the rolling starting temperature is 1060°C (Example 1) or 1100°C (Example 2), the thickness of the immediate slab is 240 mm and reduction of the each rolling pass is ≥16%; the second stage has the rolling starting temperature of 860°C with reduction of accumulated rolling passes 65% (Example 1), or the second stage has the rolling starting temperature of 840°C with reduction of accumulated rolling passes of 65% (Example 2), the finished steel plates have a thickness of 70 mm (Example 1) and 70 mm (Example 2); after rolling, the steel plates are cooled by air to 680°C (Example 1) and 650°C (Example 2); thereafter, an accelerated cooling is applied, with a cooling rate of 13-17°C/s and a final cooling temperature of 400°C (Example 1) and 430°C (Example 2), and finally cooling by air to ambient temperature.

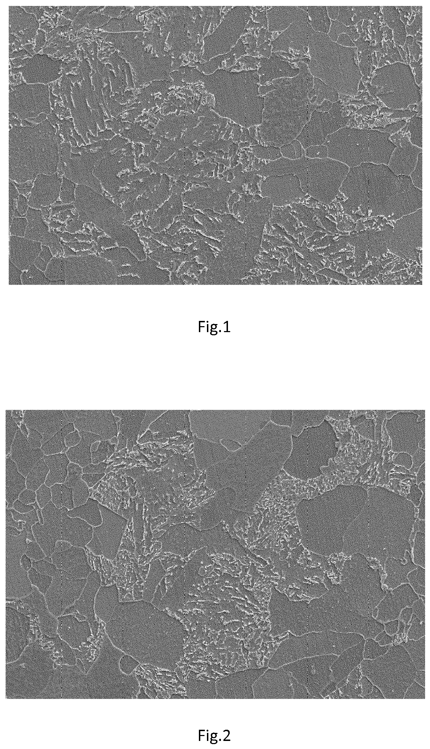

The chemical components of the steel plates produced by example 1 and 2 are listed in table 1, the mechanical properties of the steel plates are listed in table 2, and the microstructures positioned at 1/4 and 1/2 thickness of the steel plates are shown in Fig. 1 and Fig. 2.

Table 1 The chemical components (wt.%) of the ultra-heavy steel plates with low cracking sensitivity and low yield ratio of examples 1 and 2

| Example | C | Si | Mn | P | S | Al | Nb | V | Ti | Cr | Ni | Mo | Cu | N | Ceq | Pcm |
|---|---|---|---|---|---|---|---|---|---|---|---|---|---|---|---|---|
| 1 | 0.06 | 0.28 | 1.55 | 0.012 | 0.002 | 0.026 | 0.036 | 0.041 | 0.014 | 0.16 | 0.27 | 0.12 | 0.23 | 0.0028 | 0.42 | 0.19 |
| 2 | 0.07 | 0.23 | 1.54 | 0.011 | 0.002 | 0.030 | 0.034 | 0.036 | 0.015 | 0.16 | 0.27 | 0.11 | 0.23 | 0.0027 | 0.42 | 0.19 |

$Ceq=C+Mn/6+(Cr+Mo+V)/5+(Ni+Cu)/15$
$Pcm=C+Si/30+(Mn+Ci+Cr)/20+Ni/60+Mo/15+V/10+5B$

Table 2 The mechanical properties of the ultra-heavy steel plates with low cracking sensitivity and low yield ratio of examples 1 and 2

| | Thickness/mm | Position | Yieldstrength/ MPa | Tensile strength /MPa | Breaking elongation rate/% | Yield ratio | Impact energy at -60°C/J | Reduction of area in Zdirection /% |
|---|---|---|---|---|---|---|---|---|
| Example 1 | 70 mm | 1/4 | 504 | 676 | 26.2 | 0.75 | 252,236,247 | 75,70,72 |
| | | 1/2 | 483 | 669 | 27.5 | 0.72 | 205,196,216 | |
| Example2 | 70 mm | 1/4 | 498 | 668 | 25.9 | 0.75 | 228,232,248 | 73,75,70 |
| | | 1/2 | 479 | 657 | 28.0 | 0.73 | 198,185 | |

The invention has filled the domestic blank by the components design of ultra-low carbon, low carbon equivalent and low cracking sensitivity and by the low cracking sensitivity, low yield ratio steel plates with a thickness of 40-70 mm which is successfully manufactured by the controlled rolling and controlled cooling process and can be used at the condition of -60°C.

## Claims

1. An ultra-heavy steel plate with low cracking sensitivity and low yield ratio being the ratio of yield strength to tensile strength, wherein the mass percentages of chemical components of the steel plate are C 0.05-0.09; Si 0.2-0.4; Mn 1.3-1.6; Al 0.02-0.04; Nb 0.03-0.08; V 0.03-0.08; Cr 0.1-0.5; Ni 0.1-0.5; Mo 0.1-0.3; Cu 0.2-0.5; Ti 0.01-0.02; P$\leq$0.015; S$\leq$0.003; N$\leq$0.007, the balance being Fe and inevitable impurities, carbon equivalent is $\leq$0.43, cold cracking sensitivity coefficient Pcm is $\leq$0.20,
wherein the carbon equivalent Ceq and the cold cracking sensitivity coefficient Pcm are calculated respectively from following equations:

$$Ceq=C+Mn/6+(Cr+Mo+V)/5+(Ni+Cu)/15$$

$$Pcm=C+Si/30+(Mn+Cu+Cr)/20+Ni/60+Mo/15+V/10+5B;$$

wherein the steel plate has a thickness of 40-70 mm, a yield strength of $\geq$460MPa, a tensile strength of 570-760MPa, a yield ratio of $\leq$0.80, an elongation rate of $\geq$17%, Charpy impact energy of $\geq$150J when it is measured at 1/4 thickness and 1/2 thickness of the steel plates at the temperature of -60°C, a reduction of area in Z direction is $\geq$35%, which is adapted to be applied in low-temperature environments at -60°C.

2. A method for manufacturing the ultra-heavy steel plate with low cracking sensitivity and low yield ratio according to claim 1, **characterized in that** it comprises the following process steps:

(1) producing high-purity molten steel by KR molten iron pretreatment, converter smelting, LF refining, RH vacuum degassing treatment, then producing a continuous casting slab with a thickness of 150-450 mm by an ultra-heavy slab continuous casting process, thereafter treating the continuous casting slabs with covering by a lid, stacking for slow cooling and hydrogen diffusion, wherein the time of stacking for slow cooling is $\geq$ 120 hours;
(2) heating the continuous casting slabs to 1130-1250°C, incubating for 150-180min, and descaling the continuous casting slabs by high pressure water after exiting the furnace;
(3) exerting two stages of rolling on the continuous casting slabs, the first stage is rough rolling with a rolling starting temperature of 1050-1150°C and reduction ratio of each rolling pass is $\geq$15%; the second stage is finish rolling with a rolling starting temperature of 840-900°C and reduction ratio of accumulated rolling passes is$\geq$60%;
(4) applying a controlled cooling after rolling,the controlled cooling comprising two stages, the first stage is an air-cooling stage with a cooling starting temperature of 800-860°C and a final cooling temperature of 600-750°C; the second stage is an accelerated cooling stage with a cooling rate of 13-17°C/s and a final cooling temperature of 300-450°C;
(5) after the controlled cooling stage, applying a hot straightening treatment, and finally cooling by air to obtain the steel plate finished-products.

## Patentansprüche

1. Extrem schwere Stahlplatte mit geringer Rissbildungsanfälligkeit und einem niedrigen Dehnverhältnis, welches das Verhältnis zwischen der Dehngrenze und der Zugfestigkeit ist, wobei die Massenprozente der chemischen Bestandteile der Stahlplatte betragen: 0,05 - 0,09 C; 0,2 - 0,4 Si; 1,3 - 1,6 Mn; 0,02 - 0,04 Al; 0,03 - 0,08 Nb; 0,03 - 0,08 V; 0,1 - 0,5 Cr; 0,1 - 0,5 Ni; 0,1 - 0,3 Mo; 0,2 - 0,5 Cu; 0,01 - 0,02 Ti, $\leq$ 0,015 P; $\leq$ 0,003 S; $\leq$ 0,007 N; wobei der Rest aus Fe und unvermeidbaren Verunreinigungen besteht, das Kohlenstoffäquivalent $\leq$ 0,43 beträgt und der Kaltrissbildungsanfälligkeitskoeffizient Pcm $\leq$ 0,20 beträgt,
wobei das Kohlenstoffäquivalent Ceq und der Kaltrissbildungsanfälligkeitskoeffizient Pcm jeweils auf der Basis der folgenden Gleichungen berechnet werden:

$$Ceq = C + Mn/6 + (Cr + Mo + V)/5 + (Ni + Cu)/15$$

$$Pcm = C + Si/30 + (Mn + Cu + Cr)/20 + Ni/60 + Mo/15 + V/10 + 5B ;$$

wobei die Stahlplatte aufweist: eine Dicke von 40 - 70 mm, eine Dehngrenze von $\geq$ 460 MPa, eine Zugfestigkeit von 570 - 760 MPa, ein Dehnverhältnis von $\leq$ 0,80, eine Dehnrate von $\geq$ 17%, eine Kerbschlagenergie von $\geq$ 150 J, wenn bei einer ¼-Dicke und einer ½-Dicke der Stahlplatte bei einer Temperatur von -60°C gemessen wird, wobei eine Flächenreduktion in Z-Richtung $\geq$ 35% beträgt, welche dafür eingerichtet ist, in einer Niedrigtemperaturumgebung bei -60°C angewandt zu werden.

**2.** Verfahren zur Herstellung der extrem schweren Stahlplatte mit geringer Rissbildungsanfälligkeit und einem niedrigen Dehnverhältnis gemäß Anspruch 1, **dadurch gekennzeichnet, dass** es die folgenden Verfahrensschritte umfasst:

(1) Herstellung einer Stahlschmelze mit hohem Reinheitsgrad durch KR-Vorbehandlung von geschmolzenem Eisen, Konverter-Schmelzen, LF-Raffinierung, RH-Vakuumentgasungsbehandlung, dann Herstellung einer Stranggussbramme mit einer Dicke von 150 - 450 mm durch ein Stranggussverfahren für extrem schwere Brammen, danach Behandlung der Stranggussbrammen durch Abdeckung mit einem Deckel, Stapelung zum langsamen Abkühlen und zur Wasserstoffdiffusion, wobei die Stapelungs-Zeitdauer zum langsamen Abkühlen $\geq$ 120 Stunden beträgt;
(2) Erhitzen der Stranggussbrammen auf 1130 - 1250°C, Inkubieren für 150 - 180 Minuten und Entzundern der Stranggussbrammen durch Hochdruckwasser nach Verlassen des Ofens;
(3) Anwendung von zwei Walzstufen auf die Stranggussbrammen, wobei die erste Stufe aus einem Grobwalzen mit einer Starttemperatur des Walzens von 1050 - 1150°C und einem Reduktionsverhältnis jedes Walzdurchgangs von $\geq$ 15% besteht; wobei die zweite Stufe aus einem Fertigwalzen mit einer Starttemperatur des Walzens von 840 - 900°C und einem Reduktionsverhältnis der kumulierten Walzdurchgänge von $\geq$ 60% besteht;
(4) Anwendung einer gesteuerten Abkühlung nach dem Walzen, wobei die gesteuerte Abkühlung zwei Stufen aufweist, wobei die erste Stufe aus einer Luftkühlungsstufe mit einer Abkühlstarttemperatur von 800 - 860°C und einer Endabkühltemperatur von 600 -750°C besteht; wobei die zweite Stufe aus einer beschleunigten Abkühlungsstufe mit einer Abkühlgeschwindigkeit von 13-17°C/s und einer Endabkühltemperatur von 300 - 450°C besteht;
(5) nach der gesteuerten Abkühlstufe, Anwendung einer Warmrichtbehandlung und einer Endabkühlung durch Luft zum Erhalt der fertigen Stahlplattenprodukte.

**Revendications**

**1.** Plaque en acier ultra lourde comprenant une sensibilité à la fissuration faible et un bas ratio de rendement, qui est le rapport entre la limite d'élasticité et la résistance à la traction, dans lequel les pourcentages en masse des composants chimiques de la plaque en acier sont les suivants : 0,05 - 0,09 de C; 0,2 - 0,4 de Si; 1,3 - 1,6 de Mn; 0,02 - 0,04 de Al; 0,03 - 0,08 de Nb; 0,03 - 0,08 de V; 0,1 - 0,5 de Cr; 0,1 - 0,5 de Ni; 0,1 - 0,3 de Mo; 0,2 - 0,5 de Cu; 0,01 - 0,02 de Ti, $\leq$ 0,015 de P; $\leq$ 0,003 de S; $\leq$ 0,007 de N; le reste étant du Fe et des impuretés inévitables, l'équivalent en carbone étant $\leq$ 0,43 ; le coefficient de sensibilité à la fissuration à froid Pcm étant $\leq$ 0,20, dans lequel l'équivalent en carbone Ceq et le coefficient de sensibilité à la fissuration à froid Pcm sont calculés à partir des équations suivantes :

$$Ceq = C + Mn/6 + (Cr + Mo + V)/5 + (Ni + Cu)/15$$

$$Pcm = C + Si/30 + (Mn + Cu + Cr)/20 + Ni/60 + Mo/15 + V/10 + 5B ;$$

dans lequel la plaque en acier comprend une épaisseur comprise entre 40 et 70 mm, une limite d'élasticité de $\geq$ 460 MPa, une résistance à la traction comprise entre 570 et 760 MPa, un ratio de rendement de $\leq$ 0,80, un taux d'allongement de ≥ 17%, une énergie de rupture de ≥ 150 J, si on mesure à un quart d'épaisseur et à la moitié d'épaisseur de la plaque en acier à la température de -60°C, une réduction de section dans la direction Z étant ≥ 35%, qui est adaptée à être appliquée dans un environnement à température basse de -60°C.

2. Procédé de fabrication de la plaque en acier ultra lourde comprenant une sensibilité à la fissuration faible et un bas ratio de rendement, selon la revendication 1, **caractérisé en ce que** le procédé comprend les étapes de procédé suivantes de :

(1) produire de l'acier fondu de grande pureté par moyen d'un prétraitement KR de fer en fusion, d'un bain de fusion du type convertisseur, d'un raffinement LF, d'un traitement RH de dégazage sous vide, ensuite produire une brame coulée en continu ayant une épaisseur comprise entre 150 et 450 mm à l'aide d'un procédé de coulée en continu de brames ultra lourdes, ensuite traiter les brames coulées en continu en les couvrant par un couvercle, en les empilant pour un refroidissement lent et une diffusion d'hydrogène, la durée d'empilement pour le refroidissement lent étant ≥ 120 heures ;

(2) chauffer les brames coulées en continu à 1130 - 1250°C, incuber pour 150 - 180 min et décalaminer les brames coulées en continu par moyen d'eau à haute pression après la sortie du fourneau ;

(3) effectuer deux étapes de laminage sur les brames coulées en continu, la première étape étant un laminage brut à une température de laminage de départ comprise entre 1050 et 1150°C et un taux de réduction de chaque passage de laminage de ≥ 15% ; la deuxième étape étant un laminage final à une température de laminage de départ comprise entre 840 et 900°C et un taux de réduction de passages de laminages accumulés de ≥ 60% ;

(4) appliquer un refroidissement commandé après le laminage, le refroidissement commandé comprenant deux étapes : la première étape étant une étape de refroidissement par air à une température de refroidissement de départ comprise entre 800 et 860°C et une température de refroidissement finale comprise entre 600 et 750°C ; la deuxième étape étant une étape de refroidissement accéléré comprenant une vitesse de refroidissement de 13-17°C/s et une température de refroidissement finale comprise entre 300 et 450°C ;

(5) après l'étape de refroidissement commandé, appliquer un traitement de dressage à chaud et un refroidissement final par air pour obtenir les produits finis de plaque en acier.

Fig.1

Fig.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102433507 A
- CN 103114186 A
- JP 2006322019 A

- JP H11335735 A
- JP 2011017061 A